Europäisches Patentamt

European Patent Office

Office européen des brevets

(19)

(11) Veröffentlichungsnummer: **0 336 064**
**A1**

(12) **EUROPÄISCHE PATENTANMELDUNG**

(21) Anmeldenummer: 89101598.4

(22) Anmeldetag: 31.01.89

(51) Int. Cl.⁴: **F01D 5/04** , **F01D 5/14** , **F02C 6/12**

(30) Priorität: 31.03.88 DE 3811007

(43) Veröffentlichungstag der Anmeldung:
**11.10.89 Patentblatt 89/41**

(84) Benannte Vertragsstaaten:
**DE FR GB IT SE**

(71) Anmelder: **DAIMLER-BENZ AKTIENGESELLSCHAFT**
**Mercedesstrasse 136**
**D-7000 Stuttgart 60(DE)**

(72) Erfinder: **Sumser, Siegfried, Dipl.-Ing.**
**Enzstrasse 34**
**D-7000 Stuttgart(DE)**

(54) **Abgasturbolader für eine Brennkraftmaschine.**

(57) Bei einem Abgasturbolader für eine Brennkraftmaschine mit einem Turbinenrad, dem das Abgas unterhalb einer vorgebbaren Drehzahl der Brennkraftmaschine über einen ersten Zuführkanal (7) annähernd axial und oberhalb der vorgegebenen Drehzahl über diesen ersten und/oder einen zweiten Zuführkanal (8) radial zuführbar ist, soll der Wirkungsgrad bei instationärem Betriebsverhalten, d.h. insbesondere beim Beschleunigen im Teillastbereich der Brennkraftmaschine, verbessert werden.

Zu diesem Zweck ist der Strömungsbereich der Turbine in eine radial innere (5) und eine radial äußere (6) Kammer durch eine Ringwand (4) unterteilt. Die Turbinenschaufeln können dadurch in beiden Kammern in Form und Verlauf unterschiedlich sein. Insbesondere kann der Austrittswinkel der Schaufeln in der inneren Kammer bezogen auf die Umfangsrichtung des Turbinenrades kleiner als derjenige der Schaufeln in der radial äußeren Kammer sein.

Fig. 1

## Abgasturbolader für eine Brennkraftmaschine

Die Erfindung betrifft einen Abgasturbolader für eine Brennkraftmaschine nach dem Oberbegriff des Patentanspruchs 1.

Ein derartiger Abgasturbolader ist aus DE-C-3427715 bekannt.

Der dort zusätzlich vorgesehene annähernd axial verlaufende Abgaszufuhrkanal dient zur Verbesserung des Beschleunigungsverhaltens im Teillastbereich der Brennkraftmaschine. Durch jenen Zusatzkanal ist es möglich, den Eintrittswinkel der Schaufeln des Turbinenrades für das im Teillastbereich zuströmende Abgas in Richtung niedriger Stoßverluste in dieser Betriebsphase auszulegen.

Nachteilig bei jenem bekannten Turbinenrad ist es jedoch, daß der annähernd axial geführte Abgasstrom durch das dort gleichzeitig auch für die radiale Anströmung ausgelegte Turbinenrad nicht optimal geführt werden kann. Dies liegt daran, daß das annähernd axial zugeführte Abgas sich im Bereich der Turbinenradschaufeln in unerwünschter Weise nach radial außen in denjenigen Bereich ausweitet, der zur Aufnahme des radial zugeführten Abgasstromes ausgelegt ist. Dadurch kommt es bei dem annähernd axial zugeführten Abgas innerhalb der Turbinenrad-Schaufelräume zu leistungsmindernden unerwünschten Verwirbelungen.

Ein weiterer Nachteil jenes bekannten Turboladers besteht darin, daß nur der Eintrittswinkel der Turbinenradschaufeln auf die unterschiedlichen Zuführkanäle abstimmbar ist, nicht dagegen der Austrittswinkel. Dadurch kann der Austrittswinkel der Schaufeln in bezug auf den annähernd axial zugeführten Abgasstrom nicht so ausgelegt werden, wie es für eine hohe Leistungsausbeute in diesem Betriebsbereich wünschenswert und an sich erzielbar wäre, wenn nicht auf die radiale Abgasanströmung zusätzlich Rücksicht genommen werden müßte.

Hier Verbesserungen zu schaffen, durch die im instationären Betriebsbereich des Abgasturboladers, in dem hauptsächlich das annähernd axial zugeführte Abgas den Antrieb bewirkt, der Turbinenwirkungsgrad erhöht werden kann, ist die Aufgabe der vorliegenden Erfindung.

Gelöst wird diese Aufgabe durch eine Ausbildung des Turbinenrades nach den kennzeichnenden Merkmalen des Patentanspruchs 1.

Eine weitere Verbesserung der Turbinenleistung bei Motorbeschleunigungen im Teillastbereich bietet die Ausführung nach Anspruch 2.

Anhand des in der Zeichnung dargestellten Ausführungsbeispieles werden die Vorteile der Erfindung noch ausführlicher dargelegt werden.

In der Zeichnung zeigen

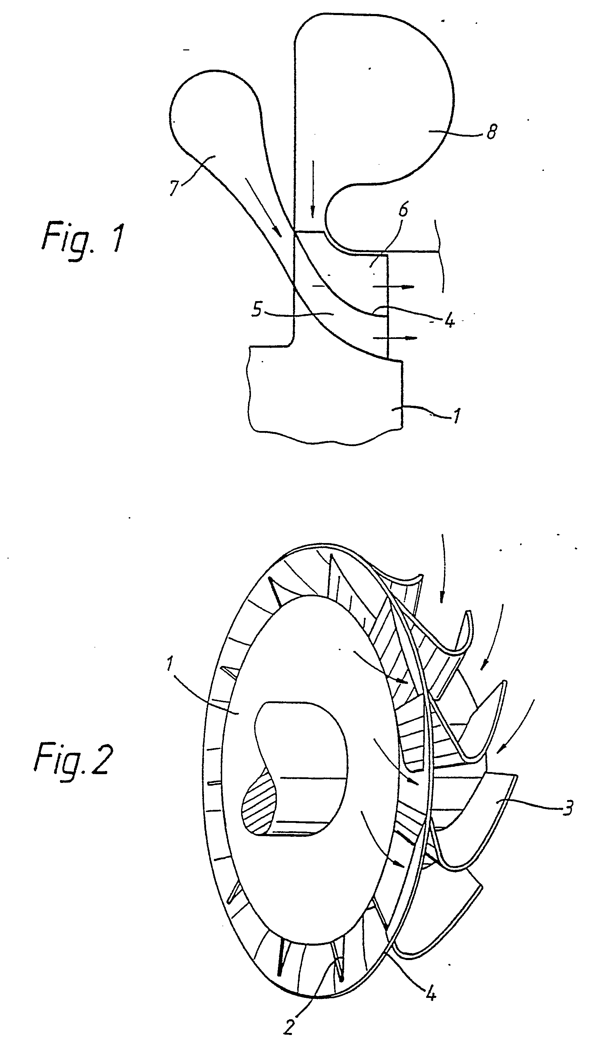

Fig. 1 eine schematische Darstellung der Abgasturbine im Längsschnitt, beschränkt auf eine Hälfte der Turbine

Fig. 2 die Ansicht auf ein Turbinenrad in Richtung der annähernd axialen Abgas-Anströmung

Fig. 3 eine Ansicht auf die Abgas-Austrittsseite des Turbinenrades

Fig. 4 eine Seitenansicht auf das Turbinenrad

Das Turbinenrad besteht aus einem inneren Nabenkörper 1 sowie einem Kranz radial innen liegender Schaufeln 2 und radial außen liegender Schaufeln 3, wobei beide Schaufelkränze durch eine Ringwand 4 voneinander getrennt sind.

Durch die Ringwand 4 entsteht ein von den inneren Schaufeln durchlaufener innerer Kammer 5 - und ein von den Schaufeln 3 durchlaufener äußerer Kammer 6-Raum.

Das annähernd axial zugeführte Abgas strömt durch den Einlaßkanal 7 auf die inneren Schaufeln 2 und das radial zugeführte Abgas erreicht die äußeren Schaufeln 3 über den Haupteinlaßkanal 8.

Über ein Ventil können die über die Einlaßkanäle 7 und 8 zuzuführenden Abgasteilmengen variiert werden. Im instationären Betriebsbereich der Abgasturbine, das heißt insbesondere während einer Motorbeschleunigung im unteren Motorlastbereich, erfolgt die Abgaszufuhr ausschließlich bzw. zumindest überwiegend durch den annähernd axial ausgerichteten Einlaßkanal 7.

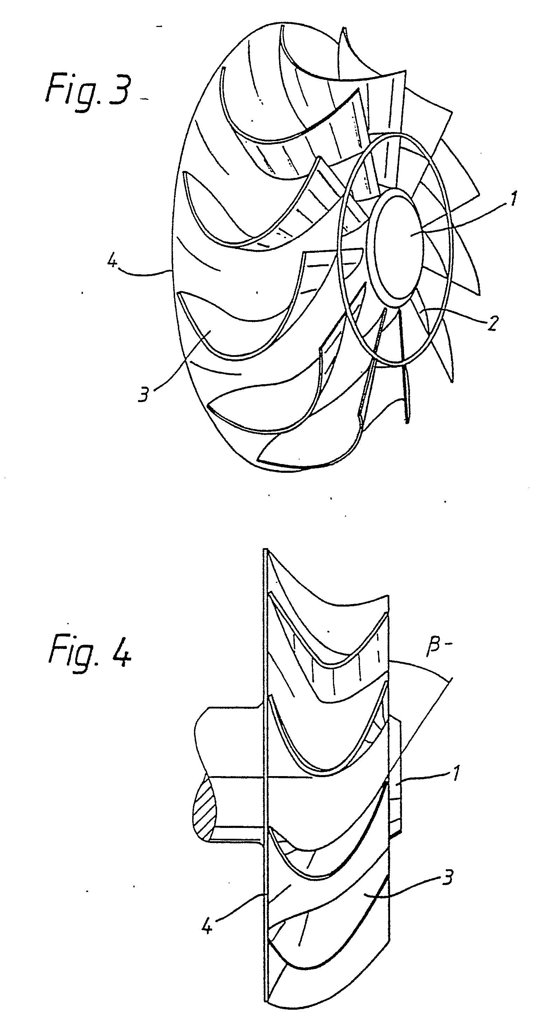

Der wesentliche Vorteil der erfindungsgemäßen Aufteilung der Turbinenschaufelräume in einen inneren und einen äußeren durch eine Ringwand getrennten Bereich besteht darin, daß die Anordnung der Schaufeln 2 der inneren Kammer auf niedrige Abgasmengenströme ausgelegt werden kann. Denn die äußere Kammer 3 kann die beim Vollastbetrieb des Motors anfallenden hohen Abgasmengen aufnehmen, indem sie eine hierfür entsprechende Form erhält. Für geringe Abgasströme kann der Austrittswinkel (Winkel beta in Fig. 4) der inneren Schaufeln 2 kleiner ausgelegt werden als es für den Durchsatz größerer Abgasmengen erforderlich wäre. Ein kleiner Austrittswinkel ist insbesondere bei geringen Abgasmengenströmen für einen hohe Leistung der Turbine äußerst wichtig. Bei einem Turbinenrad mit radial nicht in zwei getrennten Kammern getrennten Schaufeln kann der für geringe Abgasmengen optimale geringe Austrittswinkel beta nicht eingestellt werden, da bei einem solch geringen Austrittswinkel die Turbine den maximal anfallenden Abgasstrom nicht aufnehmen könnte.

Die Abgasturbine mit radial geteilten Räumen bietet erstmals die Möglichkeit, die Form und den Verlauf der Turbinenschaufeln in jeder der beiden Kammern den dort in unterschiedlicher Größe durchführbaren Abgasmengenströmen über die gesamte Höhe und Breite ideal anzupassen.

Im Motorbetrieb erfolgt die Aufteilung des Abgasstromes in die beiden Kammern des Turbinenrades in der Weise, daß bei geringem Abgasstrom zunächst ausschließlich die innere Kammer beaufschlagt wird, während die äußere Kammer hinzugenommen wird, wenn der Abgasstrom das Maß, für das die innere Kammer ausgelegt ist insgesamt überschreitet. In diesem Fall wird das Abgas dann durch beide Kammern geführt. Möglich ist jedoch auch ein völliges Abschalten der inneren Kammer.

Ein kleiner Austrittswinkel beta der inneren Turbinenschaufeln gewährleistet eine hohe Strömungsumlenkung des Abgases in der zugehörigen Kammer und bedingt dadurch die angestrebte hohe Turbinenleistung bei geringen Gasdurchsätzen. Der gegenüber dem Austrittswinkel der Innenschaufeln größere Austrittswinkel der äußeren Schaufeln gewährleistet wiederum, daß bei insgesamt kleinem Bauvolumen der Abgasturbine dennoch relativ hohe Abgasströme durch die Turbine hindurchgeführt werden können. Bei der Verwendung zweier in radialer Richtung getrennter Kammern kann also von dem bei einteiliger Kammer erforderlichen Kompromiß eines mittleren Austrittswinkels, der sowohl den Erfordernissen für einen guten Wirkungsgrad bei geringen Abgasströmen und dem Erfordernis eines insgesamt hohen Abgasdurchsatzes genügen muß, in Richtung eines optimalen Winkels für beide Grenzfälle abgewichen werden.

Der Austrittswinkel beta kann z.B. bei den inneren Schaufeln 2 auf einen Wert von etwa 25° und derjenige für die äußeren Schaufeln 3 auf etwa 40° jeweils bezogen auf die Umfangsrichtung des Turbinenrades ausgelegt sein.

## Ansprüche

1. Abgasturbolader für eine Brennkraftmaschine mit einem Turbinenrad, dem das Abgas unterhalb einer vorgebbaren Drehzahl der Brennkraftmaschine über einen ersten Zuführkanal anähernd axial und oberhalb der vorgegebenen Drehzahl über diesen ersten und/oder einen zweiten Zuführkanal radial zuführbar ist,
**dadurch gekennzeichnet,**
daß das Turbinenrad mit in zwei radial übereinanderliegenden koaxial getrennten Ringkammern (5,6) angeordneten Schaufeln (2 bzw. 3) versehen ist, wobei die radial innere Ringkammer (5) mit dem ersten (7) und die radial äußere Ringkammer (6) mit dem zweiten Zuführkanal (8) verbunden ist.

2. Turbolader nach Anspruch 1,
**dadurch gekennzeichnet,**
daß die Schaufeln (2) des Turbinenrades der inneren Kammer (5) einer kleineren Austrittswinkel beta in bezug auf die Umfangsrichtung des Turbinenrades besitzen als die Schaufeln (3) der äußeren Kammer (6).

*Fig. 1*

*Fig. 2*

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y,D | DE-C-3 427 715 (DAIMLER-BENZ) <br> * Insgesamt * <br> --- | 1,2 | F 01 D 5/04 <br> F 01 D 5/14 <br> F 02 C 6/12 |
| Y | DE-A-1 935 872 (H. BACHL) <br> * Insgesamt * <br> --- | 1 | |
| Y | GB-A- 609 322 (POWER JETS) <br> * Seite 3, Zeilen 42-47; Figuren 1-4 * <br> --- | 2 | |
| A | GB-A- 191 714 (METRO-VICKERS) <br> * Seite 2, Zeilen 79-86; Figur 1 * <br> --- | 1 | |
| A | US-A-2 625 365 (MOORE) <br> * Spalte 2, Zeilen 1-29; Figur 4 * <br> --- | 1 | |
| A | GB-A- 610 786 (CENTRE NATIONAL DE LA RECHERCHE SCIENTIFIQUE) <br> * Seite 1, Zeile 82 - Seite 2, Zeile 29; Figuren 1-9 * <br> --- | 1 | |
| A | FR-A-1.285 124 (DAIMLER-BENZ) <br> * Seite 2, linke Spalte, letzter Absatz; Figuren 1,2 * <br> ----- | 1,2 | RECHERCHIERTE SACHGEBIETE (Int. Cl.4) <br><br> F 02 C <br> F 01 D |

Der vorliegende Recherchenbericht wurde für alle Patentansprüche erstellt

| Recherchenort | Abschlußdatum der Recherche | Prüfer |
|---|---|---|
| DEN HAAG | 28-06-1989 | CRIADO Y JIMENEZ F.A. |